# EUROPEAN PATENT APPLICATION

(11) **EP 1 211 142 A2**
(43) Date of publication of application: **05.06.2002**
(21) Application number: 01403054.8
(22) Date of filing: 28.11.2001
(51) Int. Cl.: B60R 16/02

(54) **Waterproof structure for a wire harness**

(30) Priority: 29.11.2000 JP 2000362798
(71) Applicant: Sumitomo Wiring Systems, Ltd., Yokkaichi-City, Mie, 510-8503 (JP)
(72) Inventor: Matsunaga, Takehiro, Yokkaichi-city, Mie 510-8503 (JP)
(74) Representative: Uchida, Kenji

(57) **Abstract**

A waterproof structure applied to a wire harness (1) has a length direction and comprises a plurality of electrical cables (4), each of the electrical cables (4) including wire cores and a tubular coating (4b). The electrical cables (4) are respectively stripped of the tubular coating (4b) at a same given portion chosen in the length direction of the wire harness (1), and the wire cores are exposed. The exposed wire cores are adhered to one another by soldering, thereby forming an aggregated external surface. The aggregated external surface are then provided with a waterproofing material (5) including an adhering material (5a), and that portion of the wire harness (1) corresponding to the aggregated external surface is provided with a bend-preventing means (6). The waterproof structure of the invention can be applied to a wire harness (1) subjected to frequent bending.

## Description

The present invention generally pertains to a waterproof structure for a wire harness mountable in a vehicle, e.g. an automobile. In particular, the invention concerns a waterproof structure resistant to bending stress. The invention also relates to a wire harness including such a waterproof structure. The invention further relates to a method of preparing such a waterproof structure or wire harness.

Wire harnesses are commonly used for connecting electrical apparatuses to one another in a vehicle such as automobile. In certain cases, they are mounted in the parts of the vehicle where a risk of water contamination is high. In such parts, water tends to penetrate into the wire harness from the periphery of a connector mounted at an end portion of the wire harness. After having penetrated, the water then advances along the wire harness by capillary effect generated between wire's cores, and reaches the other end portion of the wire harness, where an electronic control unit (ECU) is commonly mounted. The ECU is then liable to damage by water.

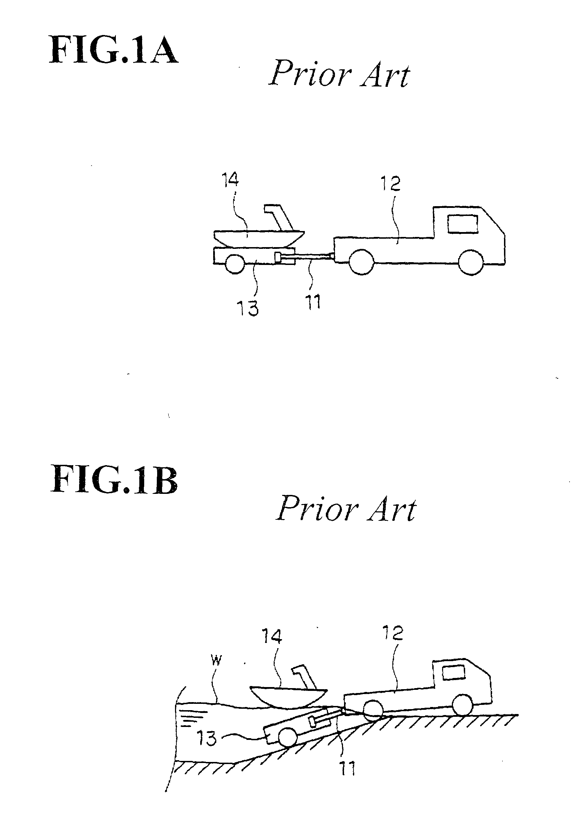

As shown in Fig.1, a vehicle 12 is attached to a trailer 13a through a towing bar or rope, and a wire harness 11 is wired along the trailer 13, so that the turn indicators of the latter can be switched from the vehicle 12. When a jet ski 14 or other water craft is carried on the trailer 13 and unloaded onto water W, the trailer 13 will have to be submerged into the water W.

In such a case, water will be soaked up from the trailer-side harness end into the vehicle-side harness end through the above-mentioned capillary effect. To prevent this from happening, the wire harness may be subjected to a waterproofing treatment, such as described in Japanese Utility Model published under No. HEI 6-86221.

According to the above document, the waterproofing treatment is performed as follows. The electrical cables constituting a wire harness are first stripped of their vinyl tube at a given position chosen in their length direction. Each electrical cable contains a plurality of wire cores, which are thus exposed, leaving spaces between them. These spaces are filled with waterproofing material, and the external surface of the latter is further wrapped with a waterproof insulator coating. In this manner, the capillary flow of water between the wire cores can be stopped at the above-mentioned given position, where the waterproofing material is located.

However, a wire harness, when wired e.g. between the vehicle 12 and the trailer 13 as exemplified above, undergoes frequent bending. As a result, the waterproofing structure such as described above suffers a disintegration between the waterproofing material and the wire cores, or between the waterproof insulator coating and wire cores, thereby forming interstices. Water then enters into and moves along the interstices.

A main object of the present invention is therefore to provide a waterproof structure for a wire harness which is substantially unaffected by frequent bending and thus can be applied to frequently bending parts of a vehicle, without losing its initial waterproofing capacity.

To this end, there is provided a waterproof structure applicable to a wire harness having a length direction and comprising a plurality of electrical cables. Each of the electrical cables includes wire cores and a tubular coating, and the electrical cables are respectively stripped of the tubular coating at a same given portion chosen in the length direction of the wire harness, to expose their wire cores.

The exposed wire cores are then adhered to one another, thereby forming an aggregated external surface.

The aggregated external surface is further provided with a waterproofing material.

The above waterproof structure further comprises a bend-preventing means extending along at least the aggregated external surface in the length direction of the wire harness.

Preferably, the waterproofing material has a substantially tubular shape with an internal circular face, and includes an adhering material on the internal circular face, so that the adhering material can be adhered to the aggregated external surface.

Suitably, the bend-preventing means comprises at least one bar made of resin material.

Typically, the waterproof structure is adapted for installation on a wire harness wired between a vehicle and a trailer linked thereto.

The invention also relates to a wire harness comprising a waterproof structure, the wire harness having a length direction and comprising a plurality of electrical cables. Each of the electrical cables includes wire cores and a tubular coating, and the electrical cables are respectively stripped of the tubular coating at a same given portion chosen in the length direction of the wire harness, to expose the wire cores.

The exposed wire cores are adhered to one another, thereby forming an aggregated external surface.

The aggregated external surface is provided with a waterproofing material.

The waterproof structure further comprises a bend-preventing means extending along at least the aggregated external surface in the length direction of the wire harness.

In the above wire harness, the waterproofing material preferably has a substantially tubular shape with an internal circular face, and includes an adhering material on the internal circular face, so that the adhering material can be adhered to the aggregated external surface.

Further, the bend-preventing means preferably comprises at least one bar made of resin material.

In the above case, the waterproof structure is preferably adapted for installation on a wire harness wired between a vehicle and a trailer linked thereto.

The invention further relates to a method of preparing a waterproof structure applicable to a wire harness having a length direction and comprising a plurality of electrical cables, each of the electrical cables including wire cores and a tubular coating. The method comprises the steps of:
stripping the electrical cables respectively of said tubular coating at a same given portion chosen in the length direction of the wire harness, to expose the wire cores;
adhering the exposed wire cores to one another, thereby forming an aggregated external surface;
providing the aggregated external surface with a waterproofing material; and
providing the waterproof structure with a bend-preventing means extending along at least the aggregated external surface in the length direction of the wire harness.

Preferably, in the above method, the waterproofing material-providing process comprises providing a waterproofing material having a substantially tubular shape with an internal circular face, and providing an adhering material on the internal circular face, so that the adhering material can be adhered to the aggregated external surface.

According to the above structure of the invention, when water penetrates from one end of the wire harness and moves along to the other end thereof through between the wire cores, its movement is stopped by the waterproof structure where the wire cores are soldered and wound with the waterproofing material.

Further, the waterproof structure is equipped with bend-preventing material, so that even when the wire harness is subjected to frequent bending, the waterproof structure is prevented from bending, and stays intact.

As a simple material is used for avoiding the bending of the waterproof structure, the overall construction costs are drastically reduced.

By virtue of the above simple but efficient protection system, the waterproof structure is no longer vulnerable to repeated bending, and secures its impermeable feature.

The above, and the other objects, features and advantages will be made apparent from the following description of the preferred embodiments, given as non-limiting examples, with reference to the accompanying drawings, in which:
Fig.1A schematically shows a vehicle and a trailer carrying a jet ski, and how a wire harness is installed;
Fig.1B schematically illustrates when the jet ski is unloaded from the trailer into water;
Fig.2 is an outside view of a wire harness wrapped with a corrugated tube, to which a waterproof structure of the invention is applied;
Fig.3A is a schematic side view of the waterproof structure according to an embodiment of the invention;
Fig.3B is a cross-sectional view taken along line A-A in Fig.3A;
Fig.4A is a side view of a resin bar according to an embodiment of the invention;
Fig.4B is a cross-sectional view of the resin bar of Fig.4A; and
Fig.5 is a perspective view of a waterproof structure according to a variant embodiment of the invention.

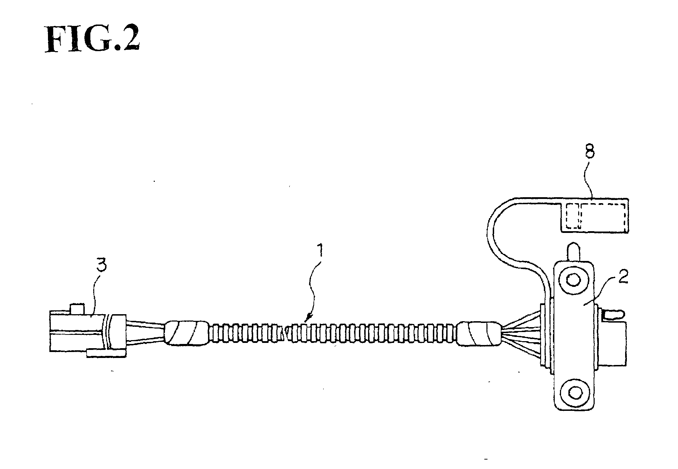

Figs.2 shows a corrugated tube mounted around a wire harness 1. First and second ends of the wire harness 1 are provided respectively with a first connector 2 and a second connector 3. The first connector 2 is linked to electrical devices loaded in a vehicle (not shown in the figure), whereas the second connector 3 is linked to a trailer (not shown in the figure). One of the electrical devices lights on or off the turn indicators of the trailer via the wire harness 1.

The trailer 13 is towed by the vehicle 12 through a metallic traction member. The wire harness 1 is wired along this traction member.

The wire harness 1 contains a bundle of electrical cables 4, and each electrical cable 4 is composed of a wire core portion 4a including individual wire cores, and a tubular coating 4b e.g. vinyl tube.

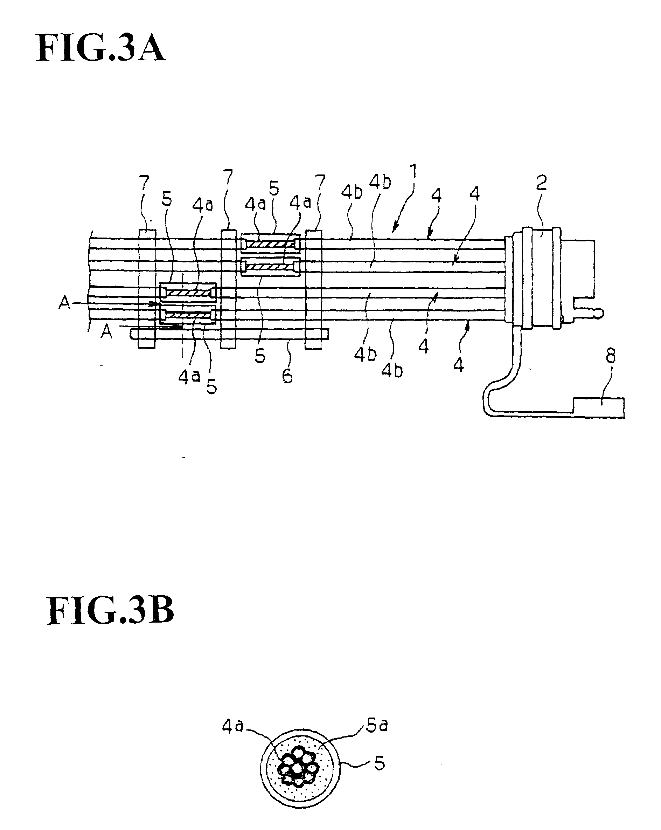

A middle portion of each electrical cable 4 (substantially half way point along the length) is stripped of the tubular coating 4b, so as to bare the wire cores. These wire cores are adhered to one another by soldering, so as to form an aggregated external surface (Figs.3A and 3B). The bared and soldered wire cores are wrapped with a heat-shrinkable tube 5 (waterproofing material), whose internal circular surface is provided with an adhering material 5a.

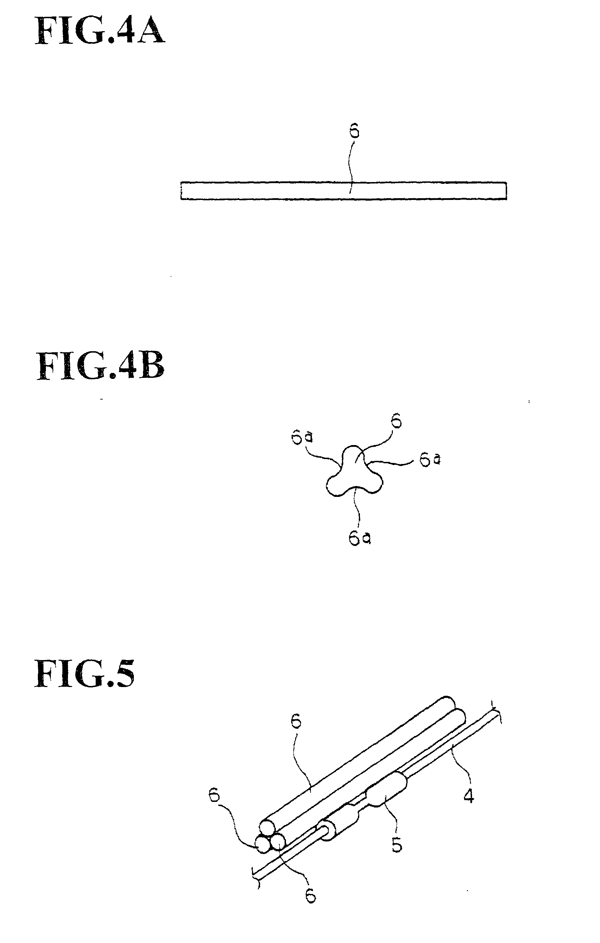

The section where the heat-shrinkable tube 5 is applied is supported by a bar made of resin material 6 as a bend-preventing member (Fig.4). The bar 6 is formed of e.g. a hard vinyl chloride, and firmly fixed along the heat-shrinkable tube 5 by e.g. a PVC tape 7. The bar made of resin material 6 is provided with one or several longitudinal recesses 6a, inside each of which extends an electrical cable 4.

The resin bar 6 can prevent electric leakage by virtue of its material characteristics. It also possesses sufficient strength, such that it can prevent flexing of the section where the heat-shrinkable tube 5 is applied. Fig.2 also shows a protection cap 8 mounted on the first connector 2.

When a vehicle 12 towing a trailer 13 is turned right or left in its displacement, the wire harness 1 connecting them is often subjected to frequent bending. Further, in circumstances such as unloading a jet ski 14 at the water front, the trailer 13 must be immersed into the water, thus inflicting a large bending force to the wire harness 1 which could lead to its breakage. The water may then penetrate into the harness, and be soaked up to the vehicle via the wire harness 1.

According to the present embodiment, the water soaked up via the wire cores is stopped from moving further, by virtue of the waterproof structure, in which the wire cores are soldered and protected by the heat-shrinkable tube 5.

Moreover, the waterproof section is supported by the bar made of resin material 6, which protects the waterproof structure, even when the harness is subjected to frequent bending.

In the above embodiment, the bend-preventing means is composed of the simple bar made of resin material 6. As the bending of the waterproof structure can be avoided by such a simple means, the waterproof structure can be prepared very economically.

As a variant embodiment, several bars made of resin material may be used, instead of one single bar 6. When three resin bars are bundled as shown in Fig.5, the bending of the waterproof structure can be prevented more efficiently.

Further, the waterproofing material is not limited to a heat-shrinkable tube, but can be a tape.

As mentioned above, when water penetrates from one end of the wire harness and moves on to the other end thereof through between the wire cores, its movement is stopped by a waterproof section where the wire cores are soldered and covered with the waterproofing material.

Further, the waterproof section is equipped with bend-preventing material, so that even when the wire harness is subjected to frequent bending, the waterproof structure is prevented from bending, and stays intact.

As the bend-preventing means contain at least one bar made of resin material, the structure is simple and the construction costs are lowered. Nonetheless, the waterproof structure is efficiently prevented from bending and suffering from water penetration.

The waterproof structure of the invention is preferably applied to a wire harness used under frequent bending conditions, such as one wired on a traction bar between a vehicle and a trailer.

## Claims

1. A waterproof structure applicable to a wire harness (1) having a length direction and comprising a plurality of electrical cables (4), each of the electrical cables (4) including wire cores and a tubular coating (4b), the electrical cables (4) being respectively stripped of the tubular coating (4b) at a same given portion chosen in the length direction of the wire harness (1), to expose the wire cores, **characterised in that**;
said exposed wire cores are adhered to one another, thereby forming an aggregated external surface;
said aggregated external surface is provided with a waterproofing material (5); and
said waterproof structure further comprises a bend-preventing means extending along at least said aggregated external surface in said length direction of said wire harness (1).

2. The waterproof structure according to claim 1, wherein said waterproofing material (5) has a substantially tubular shape with an internal circular face, and includes an adhering material (5a) on said internal circular face, so that said adhering material (5a) can be adhered to said aggregated external surface.

3. The waterproof structure according to claim 1 or 2, wherein said bend-preventing means comprises at least one bar (6) made of resin material.

4. The waterproof structure according to any one of claims 1 to 3, adapted for installation on a wire harness (1) wired between a vehicle (12) and a trailer (13) linked thereto.

5. A wire harness comprising a waterproof structure defined in any one of claims 1 to 4.

6. A method of preparing a waterproof structure applicable to a wire harness (1) having a length direction and comprising a plurality of electrical cables (4), each of the electrical cables (4) including wire cores and a tubular coating (4b), **characterised in that** said method comprises the steps of:
stripping the electrical cables (4) respectively of said tubular coating (4b) at a same given portion chosen in said length direction of said wire harness (1), so that said wire cores are exposed;
adhering said exposed wire cores to one another, thereby forming an aggregated external surface;
providing said aggregated external surface with a waterproofing material (5); and
providing said waterproof structure with a bend-preventing means extending along at least said aggregated external surface in said length direction of said wire harness (1).

7. The method according to claim 6, wherein said waterproofing material-providing process comprises providing a waterproofing material (5) having a substantially tubular shape with an internal circular face, and providing an adhering material (5a) on said internal circular face, so that said adhering material (5a) can be adhered to said aggregated external surface.
